# EUROPÄISCHE PATENTSCHRIFT

(11) **EP 1 986 262 B1**
(45) Veröffentlichungstag und Bekanntmachung des Hinweises auf die Patenterteilung: **22.09.2010**
(21) Anmeldenummer: 08153203.8
(22) Anmeldetag: 25.03.2008
(51) Int. Cl.: H01M 8/04

(54) **Kalibrierverfahren für eine Brennstoffzellensteuerung**
Calibration method for a fuel cell control system
Procédé de calibrage pour une commande de pile à combustible

(30) Priorität: 23.04.2007 DE 102007019361
(43) Veröffentlichungstag der Anmeldung: 29.10.2008
(73) Patentinhaber: J. Eberspächer GmbH & Co. KG, 73730 Esslingen (DE)
(72) Erfinder: Kaupert, Andreas, 73730, Esslingen (DE)
(74) Vertreter: BRP Renaud & Partner

(56) Entgegenhaltungen:
- EP-A- 1 261 054
- EP-A- 1 293 727
- DE-A1- 10 247 541
- JP-A- 2007 095 434
- US-A1- 2007 026 280

## Beschreibung

Die vorliegende Erfindung betrifft ein Verfahren zum Kalibrieren einer Steuereinrichtung zur Betätigung einer Fördereinrichtung zur Versorgung wenigstens einer Komponente eines Brennstoffzellensystems mit einem Gas, mit den Merkmalen des Oberbegriffs des Anspruchs 1. Die Erfindung betrifft außerdem ein Brennstoffzellensystem, das zur Realisierung des Verfahrens geeignet ist.

Ein Brennstoffzellensystem umfasst üblicherweise zumindest eine Komponente, die im Betrieb des Brennstoffzellensystems mit einem Gasstrom versorgt werden muss. Beispielsweise muss eine Brennstoffzelle mit einem Anodengasstrom und einem Kathodengasstrom versorgt werden. Ebenso ist ein gegebenenfalls zur Generierung des Anodengases vorgesehener Reformer mit einem Oxidatorgas zu versorgen. Zusätzlich kann ein Restgasbrenner zum Verbrennen von Anodenabgas mit Kathodenabgas vorgesehen sein, dem betriebspunktabhängig ein Kühlgas zugeführt werden muss. Zum Antreiben der jeweiligen Gasströmung ist dabei eine geeignete Fördereinrichtung vorgesehen, die mit Hilfe einer entsprechenden Steuereinrichtung betätigbar ist. Die Steuereinrichtung ordnet dabei, zweckmäßig über ein Kennfeld, einem Gasbedarf der jeweiligen Komponente einen Betriebszustand der Fördereinrichtung zu, der zu einer dem Gasbedarf entsprechenden Förderleistung führt. Die Zuordnung zwischen Gasbedarf der jeweiligen Komponente und Betriebszustand der Fördereinrichtung hängt insbesondere vom Strömungswiderstand des Brennstoffzellensystems ab, der im Gaspfad der von der Fördereinrichtung anzutreibenden Gasströmung vorliegt. Jede Konfigurationsänderung oder Modifikation des Brennstoffzellensystems kann zu einem veränderten Strömungswiderstand führen, wodurch die zuvor genannte Zuordnung zwischen Gasbedarf und Betriebszustand der Fördereinrichtung neu ermittelt werden muss. Mit anderen Worten, die Steuereinrichtung muss für jede Konfiguration des Brennstoffzellensystems neu parametrisiert werden. Konfigurationen des Brennstoffzellensystems sind beispielsweise die Einbindung eines Wärmeübertragers oder eine veränderte Leitungsführung oder veränderte Leitungsquerschnitte.

Aus der JP 2007-095434 A ist ein Verfahren zum Kalibrieren einer Steuereinrichtung bekannt, wobei die Steuereinrichtung zur Betätigung einer Fördereinrichtung zur Versorgung wenigstens einer Komponente eines Brennstoffzellensystems mit einem Gas dient. Beim bekannten Verfahren arbeitet die Steuereinrichtung zur Betätigung der Fördereinrichtung mit wenigstens einem Basiskennfeld, das für eine Basiskonfiguration des Brennstoffzellensystems einen Zusammenhang zwischen einem Gasbedarf der jeweiligen wenigstens einen Komponente und einem Betriebszustand der Fördereinrichtung repräsentiert. Zum Kalibrieren der Steuereinrichtung an eine von der Basiskonfiguration abweichende tatsächliche Konfiguration des Brennstoffzellensystems wird das jeweilige Kennfeld an die tatsächliche Konfiguration adaptiert. Zum Adaptieren des jeweiligen Kennfelds an die tatsächliche Konfiguration wird ein Soll-Gasbedarfs vorgegeben, wird ein sich in Abhängigkeit des Soll-Gasbedarfs einstellender Ist-Gasvolumenstrom gemessen und wird eine Soll-Ist-Abweichung zwischen Soll-Gasbedarf und Ist-Gasvolumenstrom zur Adaption des jeweiligen Kennfelds verwendet. Insoweit handelt es sich beim bekannten Verfahren um eine Steuerung mit Nachführung.

Aus der EP 1 293 727 A1 ist ein Verfahren zur Regelung der Luftzahl für ein Brennstoffzellensystem bekannt.

Brennstoffzellensysteme, bei denen grundsätzlich ein Kalibrierverfahren durchgeführt werden kann, sind beispielsweise aus der EP 1 261 054 A und aus der US 2007/026280 A1 bekannt.

Die vorliegende Erfindung beschäftigt sich mit dem Problem, für die Bereitstellung eines funktionsfähigen Brennstoffzellensystems einen vereinfachten Weg aufzuzeigen, bei dem insbesondere das Auffinden einer neuen Zuordnung zwischen Gasbedarf der jeweiligen Komponente und Betriebszustand der jeweiligen Fördereinrichtung erleichtert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Steuereinrichtung mit einem Basiskennfeld auszustatten, das den Zusammenhang zwischen dem Gasbedarf der jeweiligen Komponente und dem Betriebszustand der jeweiligen Fördereinrichtung für eine vorbestimmte Basiskonfiguration des Brennstoffzellensystems repräsentiert. Die Steuereinrichtung kann nun für den Fall, dass eine von der Basiskonfiguration abweichende tatsächliche Konfiguration des Brennstoffzellensystems vorliegt, kalibriert werden, also an die tatsächliche Konfiguration des Brennstoffzellensystems angepasst werden, indem das jeweilige Kennfeld an die tatsächliche Konfiguration adaptiert wird. Hierzu wird ein Soll-Gasbedarf vorgegeben und der daraus unter Berücksichtigung des ursprünglichen Basiskennfelds resultierende Ist-Gasvolumenstrom wird gemessen. Durch Auswerten der sich gegebenenfalls einstellen Soll-Ist-Abweichung zwischen dem Soll-Gasbedarf und dem Ist-Gasvolumenstrom kann das für die Basiskonfiguration vorgesehene Basiskennfeld an die tatsächliche Konfiguration adaptiert werden. Gewünscht ist dabei, dass nicht das gesamte Basiskennfeld neu parametrisiert werden muss, sondern dass grundsätzlich die Überprüfung eines Betriebspunkts ausreichen kann, um dann das gesamte Kennfeld entsprechend zu adaptieren. Beispielsweise wird zumindest ein Korrekturfaktor ermittelt, mit dem der für die Basiskonfiguration vorgesehene Betriebszustand korrigiert wird, um den für die tatsächliche Konfiguration geeigneten Betriebszustand zu erhalten. Die Adaption des Kennfelds lässt sich vergleichsweise einfach durchführen. Dementsprechend vereinfacht sich auch die Kalibrierung der Steuereinrichtung.

Die Steuereinrichtung muss für die jeweilige tatsächliche Konfiguration des Brennstoffzellensystems an sich nur einmal kalibriert werden. Dies erfolgt bevorzugt bei der Montage bzw. am Ende der Montage des Brennstoffzellensystems, wobei der Ist-Gasvolumenstrom in einem entsprechenden Prüfstand vergleichsweise einfach gemessen werden kann.

Erfindungsgemäß wird für das Kalibrierverfahren vorgeschlagen, als Soll-Gasbedarf denjenigen Gasbedarf zu verwenden, der bei einem vorbestimmten Referenzbetriebszustand des Brennstoffzellensystems vorliegt, wobei als Referenzbetriebszustand des Brennstoffzellensystems ein Kaltlaufbetrieb verwendet wird, bei dem im Brennstoffzellensystem keine exothermen Reaktionen ablaufen.

Bei einer anderen Ausführungsform kann vorgesehen sein, die Kalibrierung der Steuereinrichtung bzw. die Adaption des Kennfelds regelmäßig durchzuführen, also auch insbesondere im ordnungsgemäßen Betrieb des Brennstoffzellensystems. Hierdurch ist es insbesondere möglich, das jeweilige Kennfeld an Degradationserscheinungen der jeweiligen Fördereinrichtung bzw. des Brennstoffzellensystems zu adaptieren. Beispielsweise können sich im Gaspfad der mit Hilfe der Fördereinrichtung angetriebenen Gasströmung Ablagerungen anreichern, die den Strömungswiderstand im Gaspfad verändern. Durch die permanente bzw. periodische oder regelmäßige Adaption des Kennfelds arbeitet das Brennstoffzellensystem genauer. Um eine derartige regelmäßige oder periodische Adaption durchführen zu können, kann das Brennstoffzellensystem mit einem geeigneten Volumenstromsensor ausgestattet sein, mit dem der von der jeweiligen Fördereinrichtung geförderte Ist-Gasvolumenstrom messbar ist.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche, ähnliche oder funktional gleiche Komponenten beziehen. Es zeigen, jeweils schematisch,

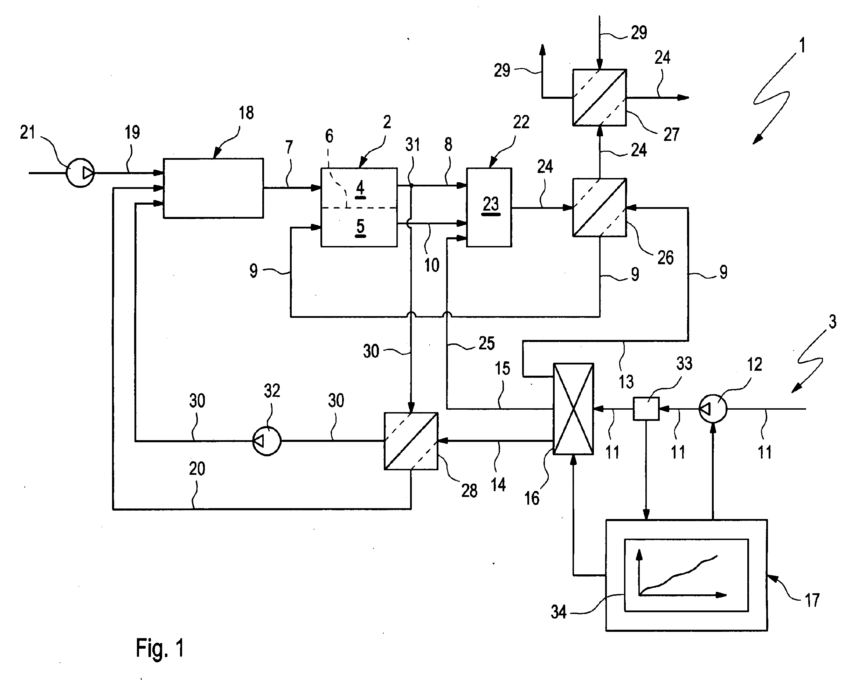

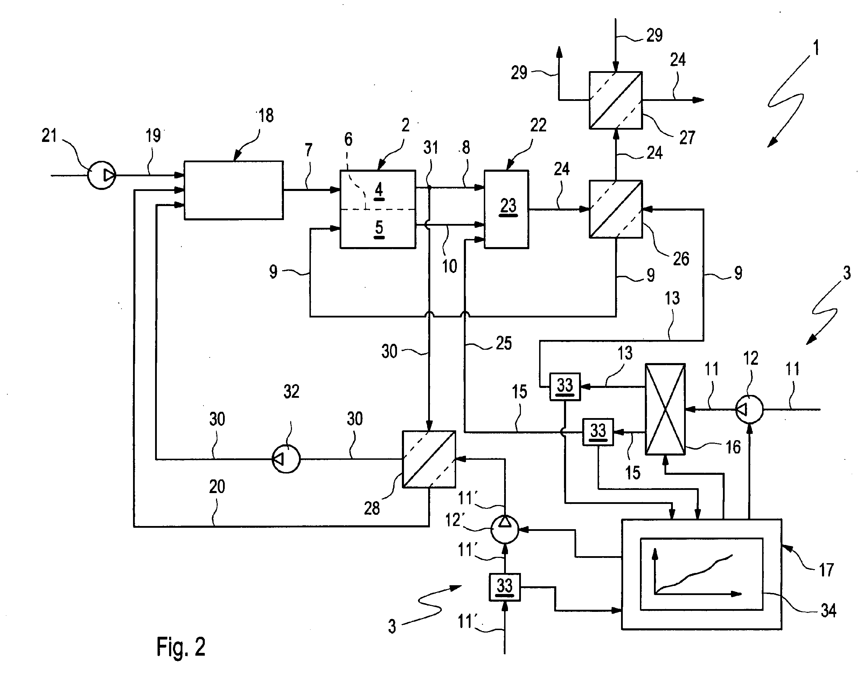

- Fig. 1 und 2: jeweils eine stark vereinfachte, schaltplanartige Prinzipdarstellung eines Brennstoffzellensystems, bei verschiedenen Ausführungsformen.

Entsprechend den Fig. 1 und 2 umfasst ein Brennstoffzellensystem 1, das vorzugsweise in einem Kraftfahrzeug angeordnet sein kann, zumindest eine Brennstoffzelle 2 sowie eine Oxidatorversorgungseinrichtung 3. Die Brennstoffzelle 2 dient in üblicher Weise zum Generieren von Strom aus einem Wasserstoffgas enthaltenden Brenngas und einem Sauerstoffgas enthaltenden Oxidatorgas. Das Brenngas wird dabei einer Anodenseite 4 der Brennstoffzelle 2 zugeführt, während das Oxidatorgas, bei dem es sich zweckmäßig um Luft handelt, einer Kathodenseite 5 der Brennstoffzelle 2 zugeführt wird. In der Brennstoffzelle 2 trennt ein Elektrolyt 6 die Anodenseite 4 von der Kathodenseite 5. Üblicherweise besteht die Brennstoffzelle 2 aus einem Stapel mehrerer Brennstoffzellenelemente, in denen jeweils die Anodenseite 4 durch einen Elektrolyten 6 von der Kathodenseite 5 getrennt ist. Vorzugsweise handelt es sich bei der Brennstoffzelle 2 um eine Hochtemperatur-Brennstoffzelle, die insbesondere als Festkörper-Brennstoffzelle bzw. als SOFC-Brennstoffzelle ausgestaltet sein kann. Ebenso ist es grundsätzlich möglich, die Brennstoffzelle 2 als Niedertemperatur-Brennstoffzelle auszugestalten, die insbesondere eine PEM-Brennstoffzelle sein kann, die mit einer Protonen-Transport-Membran bzw. mit einer Polymer-Elektrolyt-Membran als Elektrolyt 6 arbeitet. In diesem Fall ist bevorzugt noch eine hier nicht gezeigte CO-Reinigungseinrichtung vorgesehen, die zweckmäßig zwischen der Brennstoffzelle 2 und einem Reformer 18 angeordnet ist. Die Brennstoffzelle 2 erhält eingangsseitig über eine an die Anodenseite 4 angeschlossene Anodengasleitung 7 ein durch das Brenngas gebildetes Anodengas. Ein Wasserstoffgas enthaltendes Anodenabgas verlässt die Brennstoffzelle 2 ausgangsseitig über eine Anodenabgasleitung 8, die ebenfalls an die Anodenseite 4 angeschlossen ist. Desweiteren erhält die Brennstoffzelle 2 eingangsseitig über eine an die Kathodenseite 5 angeschlossene Kathodengasleitung 9 ein durch das Oxidatorgas gebildetes Kathodengas. Ein Kathodenabgas verlässt die Brennstoffzelle 2 ausgangsseitig über eine Kathodenabgasleitung 10, die hierzu an die Kathodenseite 5 angeschlossen ist.

Die Oxidatorversorgungseinrichtung 3 ist zum Zuführen von Oxidatorgas, also insbesondere von Luft, zu wenigstens einer Komponente des Brennstoffzellensystems 1 ausgestaltet. Hierzu weist die Oxidatorversorgungseinrichtung 3 eine Versorgungsleitung 11 auf, in der eine geeignete Fördereinrichtung 12, z.B. eine Pumpe oder ein Gebläse, zum Antreiben des Oxidatorgases angeordnet ist. Die Versorgungsleitung 11 kann an die jeweilige mit Oxidatorgas zu versorgende Komponente des Brennstoffzellensystems 1 direkt oder - wie hier - über einen Versorgungsleitungszweig angeschlossen sein.

Bei dem in Fig. 1 gezeigten Beispiel sind drei derartige Versorgungsleitungszweige vorgesehen, nämlich ein erster Versorgungsleitungszweig 13, ein zweiter Versorgungsleitungszweig 14 und ein dritter Versorgungsleitungszweig 15. Der erste Versorgungsleitungszweig 13 bildet die Kathodengasleitung 9 und führt das Oxidatorgas der Brennstoffzelle 2 zu. Bei dem in Fig. 2 gezeigten Beispiel sind nur die beiden Versorgungsleitungszweige 13 und 15 vorhanden.

Zur gezielten Aufteilung des mit der Fördereinrichtung 12 geförderten Oxidatorgases von der gemeinsamen Versorgungsleitung 11 auf die einzelnen Versorgungsleitungszweige 13,14,15 kann zumindest eine Ventileinrichtung 16 vorgesehen sein, die über eine entsprechende Steuereinrichtung 17 gezielt so betätigbar ist, dass der jeweils erforderliche Oxidatorgasvolumenstrom durch den jeweiligen Versorgungsleitungszweig 13,14,15 förderbar ist.

Vorzugsweise ist das Brennstoffzellensystem 1 außerdem mit einem Reformer 18 ausgestattet, der zum Erzeugen des Brenngases aus einem Kraftstoff und aus einem Oxidatorgas, vorzugsweise Luft, dient. Hierzu ist der Reformer 18 eingangsseitig an eine Kraftstoffleitung 19 und an eine Oxidatorleitung 20 angeschlossen. In der Kraftstoffleitung 19 ist eine Fördereinrichtung 21 zum Antreiben des Kraftstoffs angeordnet, z.B. eine Pumpe. Beim Kraftstoff handelt es sich um einen atomaren Wasserstoff enthaltenden Kraftstoff, vorzugsweise um einen Kohlenwasserstoff. Zweckmäßig kann dabei derjenige Kraftstoff verwendet werden, der in einem mit dem Brennstoffzellensystem 1 ausgestatteten Kraftfahrzeug ohnehin zum Betreiben einer Brennkraftmaschine des Fahrzeugs vorhanden ist, also insbesondere Benzin, Diesel, Biodiesel, Erdgas. Die Oxidatorleitung 20 führt dem Reformer 18 das Oxidatorgas zu und ist im gezeigten Beispiel durch den zweiten Versorgungsleitungszweig 14 gebildet.

Das Brennstoffzellensystem 1 kann außerdem einen Restgasbrenner 22 aufweisen, der zum Verbrennen von Anodenabgas mit Kathodenabgas ausgestaltet ist. Hierzu ist der Restgasbrenner 22 eingangsseitig an die Anodenabgasleitung 8 und an die Kathodenabgasleitung 10 angeschlossen. Bevorzugt ist der Restgasbrenner 22 mit einem Brennraum 23 ausgestattet, in dem eine Verbrennungsreaktion mit offener Flamme abläuft. Grundsätzlich ist jedoch auch ein Restgasbrenner 22 denkbar, der einen Oxidationskatalysator enthält und mit katalytischer Verbrennung arbeitet. Ausgangsseitig ist an den Restgasbrenner 22 eine Abgasleitung 24 angeschlossen, über die ein durch die Verbrennungsreaktion gebildetes Brennerabgas vom Restgasbrenner 22 abgeführt wird. Optional kann an den Restgasbrenner 22 eine Kühlgasleitung 25 angeschlossen sein, und zwar insbesondere kathodenseitig. Über die Kühlgasleitung 25 ist bei Bedarf ein Kühlgas, vorzugsweise Luft, dem Restgasbrenner 22 zuführbar. Im gezeigten Beispiel ist die Kühlgasleitung 25 durch den dritten Versorgungsleitungszweig 15 gebildet.

Bei der in Fig. 1 gezeigten Ausführungsform dient die Oxidatorversorgungseinrichtung 3 zur Versorgung der Brennstoffzelle 2, des Reformers 18 und des Restgasbrenners 22 mit Oxidatorgas. Bei einer anderen Ausführungsform kann die Oxidatorversorgungseinrichtung 3 auch so ausgestaltet sein, dass sie nur eine dieser Komponenten 2, 18, 22 oder nur zwei dieser Komponenten 2, 18, 22 mit dem Oxidatorgas versorgt. Zur Versorgung der jeweils anderen Komponente oder Komponenten 2, 18, 22 kann dann zumindest eine weitere Oxidatorversorgungseinrichtung mit zugehöriger Fördereinrichtung vorgesehen sein. Exemplarisch zeigt Fig. 2 eine Ausführungsform, bei der die Oxidatorversorgungseinrichtung 3 zwei separate Stränge aufweist, um einerseits die Brennstoffzelle 2 und den Restgasbrenner 22 und andererseits den Reformer 18 mit Oxidatorgas zu versorgen. Dementsprechend umfasst der Strang zur Versorgung der Brennstoffzelle 2 und des Restgasbrenners 22 die Versorgungsleitung 11 mit den beiden Versorgungsleitungszweige 13 und 15, die Fördereinrichtung 12 und die Ventileinrichtung 16. Im Unterschied dazu umfasst der Strang zur Versorgung des Reformer 18 eine eigene Versorgungsleitung 11' mit separater Fördereinrichtung 12'.

Das Brennstoffzellensystem 1 kann desweiteren zumindest einen Wärmeübertrager aufweisen. Im gezeigten Beispiel sind drei Wärmeübertrager vorgesehen, nämlich ein Hauptwärmeübertrager 26, ein Zusatzwärmeübertrager 27 und ein Rezirkulationswärmeübertrager 28. Der Hauptwärmeübertrager 26 ist einerseits in die Abgasleitung 24 und andererseits die Kathodengasleitung 9 bzw. in den ersten Versorgungsleitungszweig 13 eingebunden. Der Hauptwärmeübertrager 26 dient zur Übertragung von Wärme vom Brennerabgas auf das Kathodengas. Der Zusatzwärmeübertrager 27 ist einerseits in die Abgasleitung 24 und andererseits in eine Leitung 29 eingebunden, die zu einem grundsätzlich beliebigen Wärmeverbraucher führen kann. Insbesondere kann der Zusatzwärmeübertrager 27 über die Leitung 29 an einen Kühlkreis einer Brennkraftmaschine des mit dem Brennstoffzellensystem 1 ausgestatteten Kraftfahrzeugs oder in einen Heizkreis zum Aufwärmen eines Fahrzeuginnenraums des mit dem Brennstoffzellensystem 1 ausgestatteten Fahrzeugs eingebunden sein. Der Zusatzwärmeübertrager 27 ist in der Abgasleitung 24 stromab des Hauptwärmeübertragers 26 angeordnet und kann dem Brennerabgas zusätzliche Wärme entziehen. Der Rezirkulationswärmeübertrager 28 ist einerseits in die Oxidatorgasleitung 20 bzw. in den zweiten Versorgungsleitungszweig 14 und anderseits in eine Rezirkulationsleitung 30 eingebunden. Die Rezirkulationsleitung 30 zweigt bei 31 von der Anodenabgasleitung 8 ab und ist an die Eingangsseite des Reformers 18 angeschlossen. Sie enthält stromab des Rezirkulationswärmeübertragers 28 eine Fördereinrichtung 32 zum Antreiben des rezirkulierten Anodenabgases, bei der es sich beispielsweise um eine Pumpe, ein Gebläse oder einen Kompressor handeln kann. Das Anodenabgas kann je nach Betriebszustand der Brennstoffzelle 2 einen relativ hohen Anteil an Wasserstoffgas enthalten und kann somit durch die Rückführung in den Reformer 18 zur Steigerung des Wirkungsgrads genutzt werden.

Brennstoffzelle 2, Restgasbrenner 22, Hauptwärmeübertrager 26, Zusatzwärmeübertrager 27 und Rezirkulationswärmeübertrager 28 bilden im gezeigten Beispiel jeweils separate Komponenten. Grundsätzlich ist es jedoch möglich, zumindest zwei dieser Komponenten baulich zu einer Einheit zu integrieren. Beispielsweise kann der Restgasbrenner 22 in eine Ausgangsseite der Brennstoffzelle 2 integriert werden. Zusätzlich oder alternativ kann der Hauptwärmeübertrager 26 in die Ausgangsseite des Restgasbrenners 22 integriert werden. Ebenso ist es möglich, zwei oder drei Wärmeübertrager 26, 27, 28 zu einer baulichen Einheit zu integrieren.

Das hier gezeigte Brennstoffzellensystem 1 weist außerdem wenigstens einen Volumenstromsensor 33 auf, mit dem der von der Fördereinrichtung 12 der Oxidatorversorgungseinrichtung 3 geförderte Gasvolumenstrom messbar ist. Hierzu ist der Volumenstromsensor 33 an oder in der Versorgungsleitung 11 bzw. in oder an einem ihrer Zweige 13,14,15 angeordnet. Desweiteren ist der jeweilige Volumenstromsensor 33 auf geeignete Weise mit der Steuereinrichtung 17 verbunden. Die Steuereinrichtung 17 dient insbesondere zur Betätigung der Fördereinrichtung 12 bzw. 12' und der Ventileinrichtung 16 bzw. 16' der Oxidatorversorgungseinrichtung 3. Zusätzlich kann die Steuereinrichtung 17 z.B. auch zur Betätigung der anderen hier gezeigten Fördereinrichtungen 21, 32 vorgesehen sein.

Bei der in Fig. 1 gezeigten Ausführungsform ist der Volumenstromsensor 33 stromab der Fördereinrichtung 12 in der Versorgungsleitung 11 angeordnet. Bei der in Fig. 2 gezeigten Ausführungsform ist der Volumenstromsensor 33 bei dem dem Reformer 18 zugeordneten Strang in der Versorgungsleitung 11' stromauf der Fördereinrichtung 12' angeordnet. Im Unterschied dazu sind bei dem der Brennstoffzelle 2 und dem Restgasbrenner 22 zugeordneten Strang zwei Volumenstromsensoren 33 vorgesehen, die in den beiden Versorgungsleitungszweigen 13 und 15, also stromab der Ventileinrichtung 16 angeordnet sind.

Der jeweilige Volumenstromsensor 33 kann bei einer besonderen Ausführungsform des Brennstoffzellensystems 1 permanent im Brennstoffzellensystem 1 angeordnet sein. Ebenso ist es grundsätzlich möglich, das Brennstoffzellensystem 1 nur vorübergehend mit dem jeweiligen Volumenstromsensor 33 auszustatten. Beispielsweise kann im Rahmen der Herstellung des Brennstoffzellensystems 1 der jeweilige Volumenstromsensor 33 angebracht werden, um die Steuereinrichtung 17 einmalig zu kalibrieren. Bei wenigstens einem permanent im Brennstoffzellensystem 1 vorgesehenen Volumenstromsensor 33 ergeben sich neben der Möglichkeit der Kalibrierung der Steuereinrichtung 17 zusätzliche Möglichkeiten zur permanenten oder periodischen Adaption der Steuereinrichtung 17 an sich ändernde Umgebungsbedingungen. Bei den in den Versorgungszweigen 13 und 15 angeordneten Volumenstromsensoren 33 ergibt sich außerdem die Möglichkeit, die Ventileinrichtung 16 einmalig zu kalibrieren oder permanent zu adaptieren.

Die Steuereinrichtung 17 arbeitet zur Betätigung der Fördereinrichtung 12 mit wenigstens einem Kennfeld 34, das hier nur symbolisch dargestellt ist. Das Kennfeld 34 enthält einen mehrdimensionalen Zusammenhang zwischen einem Gasbedarf der jeweiligen, von der Fördereinrichtung 12 mit Gas versorgten Komponente und einem Betriebszustand der Fördereinrichtung 12.

Der jeweilige Betriebszustand der Fördereinrichtung 12, der sich aus dem jeweiligen Kennfeld 34 ergibt, entspricht beispielsweise einer Drehzahl eines Motors der Fördereinrichtung 12 oder einer Spannungs- bzw. Stromversorgung zum Betreiben der Fördereinrichtung 12.

Das der Erfindung zugrundeliegende Verfahren arbeitet wie folgt:

In einer Ausgangssituation enthält die Steuereinrichtung 17 das Kennfeld 34 in Form eines Basiskennfelds. Dieses Basiskennfeld 34 charakterisiert sich dadurch, dass es den genannten Zusammenhang zwischen dem Gasbedarf der jeweiligen Komponente und dem Betriebszustand der Fördereinrichtung 12 für eine vorbestimmte Basiskonfiguration des Brennstoffzellensystems 1 repräsentiert. Das bedeutet, dass die Steuereinrichtung 17 mit Hilfe des Basiskennfelds 34 für die Basiskonfiguration zu jedem Gasbedarf der jeweiligen Komponente den geeigneten Betriebszustand für die Fördereinrichtung 12 ermittelt, der zu einem Gasvolumenstrom führt, der den jeweiligen Gasbedarf deckt. Die hier in Frage kommenden Komponenten sind der Reformer 18, die Brennstoffzelle 2 und der Restgasbrenner 22. Das zu fördernde Gas ist hier das Oxidatorgas, also vorzugsweise Luft. Grundsätzlich kann auch ein gasförmiger Kraftstoff auf diese Weise gefördert werden. Die Fördereinrichtung 12 ist hier im Beispiel allen drei genannten Komponenten 2, 18, 22 zugeordnet. Wie bereits weiter oben erwähnt, kann die Fördereinrichtung 12 auch zur Versorgung nur einer der genannten Komponenten 2, 18, 22 oder zur Versorgung von nur zwei der genannten Komponenten 2, 18, 22 vorgesehen sein. Für die Versorgung der jeweils anderen Komponente oder Komponenten kann dann zumindest eine weitere Fördereinrichtung vorgesehen sein, der grundsätzlich ebenso ein Volumenstromsensor 33 zugeordnet sein kann. Somit lässt sich für die jeweilige andere Fördereinrichtung ebenfalls eine Adaption des jeweiligen Kennfelds durchführen.

Die Basiskonfiguration des Brennstoffzellensystems 1 umfasst zumindest die Brennstoffzelle 2 und die Fördereinrichtung 12 zur Versorgung der Brennstoffzelle 2 mit Gas, hier mit Oxidatorgas. Somit kann die Basiskonfiguration des Brennstoffzellensystems 1 deutlich von der hier gezeigten Konfiguration abweichen. Durch Ändern der Konfiguration des Brennstoffzellensystems 1 kann sich der Strömungswiderstand im Gaspfad des mit Hilfe der Fördereinrichtung 12 angetriebenen Gasstroms verändern. Beispielsweise beeinflussen der Hauptwärmeübertrager 26 und auch der Zusatzwärmeübertrager 27 den Strömungswiderstand im Gaspfad des Gasstroms.

Um die Steuereinrichtung 17 hinsichtlich einer von der Basiskonfiguration abweichenden tatsächlichen Konfiguration des Brennstoffzellensystems 1 zu kalibrieren, wird eine Adaption des Basiskennfelds 34 an die tatsächliche Konfiguration durchgeführt. Für einen derartigen Adaptionsvorgang wird mit Hilfe des Basiskennfelds 34 ein Soll-Gasbedarf vorgegebenen. Dieser führt über die daraus resultierende Betätigung der Fördereinrichtung 12 in der Versorgungsleitung 11 zu einem Ist-Gasvolumenstrom, der bei der Basiskonfiguration dem Soll-Gasbedarf entsprechen würde. Da hier jedoch eine von der Basiskonfiguration abweichende tatsächliche Konfiguration vorliegt, ergibt sich eine Soll-Ist-Abweichung zwischen dem Soll-Gasbedarf und dem Ist-Gasvolumenstrom. Dieser Ist-Gasvolumenstrom wird mit Hilfe des Volumenstromsensors 33 gemessen. Die so ermittelte Soll-Ist-Abweichung kann nun zur Adaption des jeweiligen Kennfelds verwendet werden. Beispielsweise wird hierzu zumindest ein Korrekturfaktor ermittelt, mit dem der aus dem Kennfeld 34 resultierende Betriebszustand multipliziert wird, um zum gewünschten Gasbedarf den richtigen Gasvolumenstrom erzeugen zu können. Anstelle eines einzelnen Korrekturfaktors oder anstelle einer Gruppe von Korrekturfaktoren kann auch eine Korrekturkennlinie ermittelt und verwendet werden.

Grundsätzlich kann die Adaption des Kennfelds 34 bei mehreren verschiedenen Werten für den Soll-Gasbedarf durchgeführt werden. Bevorzugt erfolgt die Adaption jedoch nur für einen vorbestimmten Soll-Gasbedarf. Der daraufhin ermittelte wenigstens eine Korrekturfaktor wird dann für das gesamte Kennfeld 34 verwendet.

Als Soll-Gasbedarfwird derjenige Gasbedarf verwendet , der bei einem vorbestimmten Referenzbetriebszustand des Brennstoffzellensystems 1 vorliegt. Dieser Referenzbetriebszustand kann sich beispielsweise durch bestimmte Umgebungsparameter auszeichnen. Erfindungsgemäß wird als Referenzbetriebszustand ein Kaltbetrieb des Brennstoffzellensystems 1 verwendet, bei dem im Brennstoffzellensystem 1 keine exothermen Reaktionen ablaufen. Beispielsweise wird im Kaltbetrieb quasi nur die Fördereinrichtung 12 betätigt, so dass insbesondere im Reformer 18, in der Brennstoffzelle 2 und im Restgasbrenner 22 keine Reaktionen ablaufen. Somit wird im Kaltlaufbetrieb weitgehend nur auf den Strömungswiderstand im Gaspfad des Oxidatorgases eingegangen.

Im ordnungsgemäßen Betrieb des Brennstoffzellensystems 1 kann es im Laufe der Zeit zu Degradationserscheinungen kommen, z.B. in der Fördereinrichtung 12 sowie in anderen Komponenten des Brennstoffzellensystems 1, wie z.B. im Reformer 18, in der Brennstoffzelle 2, im Restgasbrenner 22 sowie in den Wärmeübertragern 26, 27, 28 und in den einzelnen Leitungen. Degradationserscheinungen sind beispielsweise Ablagerungen von Partikeln, wie z.B. Ruß, welche den Strömungswiderstand im Gaspfad des Oxidatorgases verändern.

Gemäß einer vorteilhaften Ausführungsform kann bei einem permanent im Brennstoffzellensystem 1 angeordneten Volumenstromsensor 33 die genannte Adaption regelmäßig durchgeführt werden, um so das jeweilige Kennfeld 34 an Degradationserscheinungen innerhalb des Brennstoffzellensystems 1 anpassen zu können. Beispielsweise ist denkbar, einen derartigen Adaptionsvorgang bei jedem Start des Brennstoffzellensystems 1 zu realisieren, indem vor dem eigentlichen Warmlaufprozess der geeignete Referenzbetriebszustand, insbesondere der Kaltlaufbetrieb, eingestellt wird.

## Patentansprüche

1. Verfahren zum Kalibrieren einer Steuereinrichtung (17) zur Betätigung einer Fördereinrichtung (12) zur Versorgung wenigstens einer Komponente (2, 18, 22) eines Brennstoffzellensystems (1) mit einem Gas,
- bei dem die Steuereinrichtung (17) zur Betätigung der Fördereinrichtung (12) auf wenigstens ein Basiskennfeld (34) zugreift, das für eine Basiskonfiguration des Brennstoffzellensystems (1) einen Zusammenhang zwischen einem Gasbedarf der jeweiligen wenigstens einen Komponente (2, 18, 22) und einem Betriebszustand der Fördereinrichtung (12) repräsentiert,
- bei dem zum Kalibrieren der Steuereinrichtung (17) an eine von der Basiskonfiguration abweichende tatsächliche Konfiguration des Brennstoffzellensystems (1) das jeweilige Kennfeld (34) an die tatsächliche Konfiguration adaptiert wird,
- bei dem zum Adaptieren des jeweiligen Kennfelds (34) an die tatsächliche Konfiguration ein Soll-Gasbedarf vorgegeben wird, ein sich in Abhängigkeit des Soll-Gasbedarfs einstellender Ist-Gasvolumenstrom gemessen wird und eine Soll-Ist-Abweichung zwischen Soll-Gasbedarf und Ist-Gasvolumenstrom zur Adaptation des jeweiligen Kennfelds (34) verwendet wird,
**dadurch gekennzeichnet,**
**dass** als Soll-Gasbedarf derjenige Gasbedarf verwendet wird, der bei einem vorbestimmten Referenzbetriebszustand des Brennstoffzellensystems (1) vorliegt, wobei als Referenzbetriebszustand des Brennstoffzellensystems (1) ein Kaltlaufbetrieb verwendet wird, bei dem im Brennstoffzellensystem (1) keine exothermen Reaktionen ablaufen.

2. Verfahren nach Anspruch 1,
**dadurch gekennzeichnet,**
**dass** der Referenzbetriebszustand bei einem Start des Brennstoffzellensystems (1) realisiert wird.

3. Verfahren nach Anspruch 1 oder 2,
**dadurch gekennzeichnet,**
**dass** der Adaptionsvorgang regelmäßig auch zum Adaptieren des jeweiligen Kennfelds (34) an Degradationserscheinungen der Fördereinrichtung (12) und/oder des Brennstoffzellensystems (1) durchgeführt wird.

4. Brennstoffzellensystem, insbesondere in einem Kraftfahrzeug,
- mit wenigstens einer Brennstoffzelle (2) zum Generieren von elektrischem Strom aus einem Anodengas und einem Kathodengas,
- mit wenigstens einer Fördereinrichtung (12) zur Versorgung der wenigstens einen Brennstoffzelle (2) mit Anodengas oder Kathodengas,
- mit einer Steuereinrichtung (17) zum Betätigen der wenigstens einen Fördereinrichtung (12),
- mit wenigstens einem mit der Steuereinrichtung (17) verbundenen Volumenstromsensor (33) zum Messen des von der Fördereinrichtung (12) geförderten Gasvolumenstroms,
**dadurch gekennzeichnet,**
**dass** die Steuereinrichtung (17) so ausgestaltet ist,
- **dass** die Steuereinrichtung (17) zur Betätigung der Fördereinrichtung (12) auf wenigstens ein Basiskennfeld (34) zugreift, das für eine Basiskonfiguration des Brennstoffzellensystems (1) einen Zusammenhang zwischen einem Gasbedarf der jeweiligen wenigstens einen Komponente (2, 18, 22) und einem Betriebszustand der Fördereinrichtung (12) repräsentiert,
- **dass** zum Kalibrieren der Steuereinrichtung (17) an eine von der Basiskonfiguration abweichende tatsächliche Konfiguration des Brennstoffzellensystems (1) das jeweilige Kennfeld (34) an die tatsächliche Konfiguration adaptiert wird,
- **dass** zum Adaptieren des jeweiligen Kennfelds (34) an die tatsächliche Konfiguration ein Soll-Gasbedarf vorgegeben wird, ein sich in Abhängigkeit des Soll-Gasbedarfs einstellender Ist-Gasvolumenstrom gemessen wird und eine Soll-Ist-Abweichung zwischen Soll-Gasbedarf und Ist-Gasvolumenstrom zur Adaptation des jeweiligen Kennfelds (34) verwendet wird,
- **dass** als Soll-Gasbedarf derjenige Gasbedarf verwendet wird, der bei einem vorbestimmten Referenzbetriebszustand des Brennstoffzellensystems (1) vorliegt, wobei als Referenzbetriebszustand des Brennstoffzellensystems (1) ein Kaltlaufbetrieb verwendet wird, bei dem im Brennstoffzellensystem (1) keine exothermen Reaktionen ablaufen,
- **dass** die Steuereinrichtung (17) einen Adaptionsvorgang zum Adaptieren wenigstens eines Kennfelds (34) an Degradationsvorgänge der jeweiligen Fördereinrichtung (12) und/oder des Brennstoffzellensystems (1) selbsttätig, insbesondere regelmäßig durchführt.

5. Brennstoffzellensystem nach Anspruch 4,
**dadurch gekennzeichnet,**
- **dass** zumindest ein Reformer (18) zum Generieren von Anodengas aus seinem Brennstoff oder Kraftstoff und einem Oxidatorgas vorgesehen ist,
- **dass** die Fördereinrichtung (12) oder eine andere Fördereinrichtung (12') zur Versorgung des Reformers (18) mit Oxidatorgas dient.

6. Brennstoffzellensystem nach Anspruch 4 oder 5,
**dadurch gekennzeichnet,**
- **dass** zumindest ein Restgasbrenner (22) zum Verbrennen von Anodenabgas mit Kathodenabgas vorgesehen ist,
- **dass** die Fördereinrichtung (12) oder eine andere Fördereinrichtung zur Versorgung des Restgasbrenners (22) mit einem Kühlgas dient.

## Claims

1. A method for the calibrating of a control device (17) for actuating a delivery device (12) for the supply of at least one component (2, 18, 22) of a fuel cell system (1) with a gas,
- wherein the control device (17) for actuating the delivery device (12) makes use of at least one basic family of characteristics (34) which for a basic configuration of the fuel cell system (1) represents a relationship between a gas need of the respective at least one component (2, 18, 22) and an operating state of the delivery device (12),
- wherein for calibrating the control device (17) to an actual configuration of the fuel cell system (1) deviating from the basic configuration the respective family of characteristics (34) is adapted to the actual configuration,
- wherein for adapting the respective family of characteristics (34) to the actual configuration a set gas requirement is predetermined, an actual gas volumetric flow that is obtained as a function of the set gas requirement is measured and a set-actual deviation between set gas requirement and actual gas volumetric flow is used for the adaptation of the respective family of characteristics (34), **characterized in that** as set gas requirement the gas requirement which is present at a predetermined reference operating state of the fuel cell system (1) is used, wherein as reference operating state of the fuel cell system (1) a cold running operation is used wherein no exothermal reactions take place in the fuel cell system (1).

2. The method according to Claim 1, **characterized in that** the reference operating state is realised upon a start of the fuel cell system (1).

3. The method according to Claim 1 or 2, **characterized in that** the adaptation operation is carried out regularly also for adapting the respective family of characteristics (34) to degradation manifestations of the delivery device (12) and/or of the fuel cell system (1).

4. A fuel cell system, more preferably in a motor vehicle,
- with at least one fuel cell (2) for generating electric current from an anode gas and a cathode gas,
- with at least one delivery device (12) for the supply of the at least one fuel cell (2) with anode gas or cathode gas,
- with a control device (17) for actuating the at least one delivery device (12),
- with at least one volumetric flow sensor (33) connected to the control device (17) for measuring the gas volumetric flow delivered by the delivery device (12),
**characterized in that** the control device (17) is designed
- so that the control device (17) for actuating the delivery device (12) makes use of at least one basic family of characteristics (34) which for a basic configuration of the fuel cell system (1) represents a relationship between a gas requirement of the respective at least one component (2, 18, 22) and an operating state of the delivery device (12),
- so that for calibrating the control device (17) to an actual configuration of the fuel cell system (1) deviating from the basic configuration the respective family of characteristics (34) is adapted to the actual configuration,
- so that for adapting the respective family of characteristics (34) to the actual configuration a set gas requirement is predetermined, an actual gas volumetric flow that is obtained as a function of the set gas requirement is measured and a set-actual deviation between set gas requirement and actual gas volumetric flow is used for the adaptation of the respective family of characteristics (34),
- so that as set gas requirement the gas requirement that is present at a predetermined reference operating state of the fuel cell system (1) is used, wherein as reference operating state of the fuel cell system (1) a cold running operation is used during which no exothermal reactions take place in the fuel cell system (1),
- that the control device (17) automatically, more preferably regularly carries out an adaptation operation for adapting at least one family of characteristics (34) to degradation events of the respective delivery device (12) and/or of the fuel cell system (1).

5. The fuel cell system according to Claim 4, **characterized**
- **in that** at least one reformer (18) for generating anode gas from its fuel and an oxidant gas is provided,
- **in that** the delivery device (12) or another delivery device (12') serves for supplying the reformer (18) with oxidant gas.

6. The fuel cell system according to Claim 4 or 5, **characterized**
- **in that** at least one residual gas burner (22) for combusting anode waste gas with cathode waste gas is provided,
- **in that** the delivery device (12) for another delivery device serves for supplying the residual gas burner (22) with a cooling gas.

## Revendications

1. Procédé pour calibrer un dispositif de commande (17) pour l'actionnement d'un dispositif de transport (12) pour alimentation d'au moins un composant (2, 18, 22) d'un système de cellules de combustible (1) avec un gaz,
- sur lequel le dispositif de commande (17) a recours pour l'actionnement du dispositif de transport (12) à au moins un champ caractéristique de base (34), qui représente pour une configuration de base du système de cellules de combustible (1) un rapport entre un besoin en gaz d'au moins l'un des composants (2, 18, 22) concernés et un état de service du dispositif de transport (12),
- dans lequel, pour étalonner un dispositif de commande (17) pour une configuration réelle s'écartant de la configuration de base du système de cellules de combustible (1), le champ caractéristique (34) respectif est adapté à la configuration réelle,
- dans lequel, pour l'adaptation du champ caractéristique (34) respectif à la configuration réelle, un besoin en gaz théorique est prédéfini, un flux de volume de gaz réel s'établissant en fonction du besoin en gaz théorique est mesuré et un écart prévu-réel entre le besoin en gaz théorique et le flux volumétrique de gaz réel est utilisé pour l'adaptation du champ caractéristique (34) respectif,
**caractérisé en ce que**
on utilise comme besoin en gaz théorique le besoin en gaz qui existe lorsque le système de cellules de combustible (1) est dans un état de service de référence prédéfini, un mode de marche à froid étant utilisé comme état de service de référence du système de cellules de combustible (1), mode avec lequel aucune réaction exothermique ne se déroule dans le système de cellules de combustible (1).

2. Procédé selon la revendication 1,
**caractérisé en ce que**
l'état de service de référence est réalisé lors d'un démarrage du système de cellules à combustible (1).

3. Procédé selon la revendication 1 ou 2,
**caractérisé en ce que**
l'opération d'adaptation s'effectue régulièrement également pour l'adaptation du champ caractéristique (34) respectif à des phénomènes de dégradation du dispositif de transport (12) et/ou du système de cellules de combustible (1).

4. Système de cellules de combustible, en particulier sur un véhicule automobile,
- doté d'au moins une cellule de combustible (2) pour la génération de courant électrique à partir d'un gaz d'anode et d'un gaz de cathode
- d'au moins un dispositif de transport (12) pour l'alimentation de la au moins une cellule de combustible (2) avec du gaz d'anode ou du gaz de cathode
- d'un dispositif de commande (17) pour l'actionnement du au moins un dispositif de transport (12)
- d'au moins un capteur de flux volumique (33) relié au dispositif de commande (17) pour la mesure du flux volumique de gaz transporté par le dispositif de transport (12),
**caractérisé en ce que**
le dispositif de commande (17) est conçu de telle sorte que
- le dispositif de commande (17) a recours pour l'actionnement du dispositif de transport (12) à au moins un champ caractéristique de base (34), qui représente pour une configuration de base du système de cellules de combustible (1) un rapport entre un besoin en gaz du respectivement au moins un composant (2, 18, 22) et un état de service du dispositif de transport (12),
- **en ce que**, pour étalonner le dispositif de commande (17) sur une configuration réelle, différente de la configuration de base du système de cellules de combustible (1), le champ caractéristique (34) respectif est adapté à la configuration réelle,
- **en ce que**, pour adapter le champ caractéristique (34) respectif à la configuration réelle, on prédéfinit un besoin en gaz théorique, on mesure un flux de volume de gaz réel s'établissant en fonction du besoin en gaz théorique et on utilise un écart théorique-réel entre le besoin en gaz théorique et le flux volumétrique de gaz réel pour l'adaptation du champ caractéristique (34) respectif,
- **en ce qu'**on utilise comme besoin en gaz théorique le besoin en gaz qui est présent lorsque le système de cellules de combustible (1) est dans un état de service de référence prédéfini, sachant qu'on utilise comme état de service de référence du système de cellules de combustible (1) un mode de marche à froid, dans lequel aucune réaction exothermique ne se déroule dans le système de cellules de combustible (1),
- **en ce que** le dispositif de commande (17) effectue automatiquement, en particulier régulièrement, une opération d'adaptation pour l'adaptation d'au moins un champ caractéristique (34) à des phénomènes de dégradation du dispositif de transport (12) respectif et/ou du système de cellules de combustible (1).

5. Système de cellules de combustible selon la revendication 4,
**caractérisé en ce que**
- au moins un reformer (18) est prévu pour générer du gaz d'anode à partir d'un combustible ou d'un carburant et d'un gaz oxydant
- **en ce que** le dispositif de transport (12) ou un autre dispositif de transport (12') sert à l'alimentation du reformer (18) avec du gaz oxydant.

6. Système de cellules de combustible selon la revendication 4 ou 5,
**caractérisé en ce que**
- au moins un brûleur à gaz résiduel (22) est prévu pour la combustion de gaz d'anode avec du gaz de cathode
- **en ce que** le dispositif de transport (12) ou un autre dispositif de transport sert à l'alimentation du brûleur à gaz résiduel (22) avec un gaz refroidisseur.
